# EUROPEAN PATENT APPLICATION

(11) **EP 1 202 540 A2**
(43) Date of publication of application: **02.05.2002**
(21) Application number: 01307968.6
(22) Date of filing: 19.09.2001
(51) Int. Cl.: H04M 1/725, H04M 1/27

(54) **Handheld communication and processing device and method of operation thereof**

(30) Priority: 26.10.2000 US 697482
(71) Applicant: Agilent Technologies, Inc., Palo Alto, CA 94306 (US)
(72) Inventor: Middleton, Frazer Neil, Loveland, Colorado 80538 (US)
(74) Representative: Jackson, Richard Eric

(57) **Abstract**

A handheld communication and processing device (100) that is responsive to a voice command (500) received during communication with a remote terminal (110, 120) such as another handheld device, a computer, etc. The handheld device (100) combines a phone (200), for communicating with the remote terminal (110, 120), and the functional tools of a personal digital assistant (PDA) (250). The handheld device (100) is operable in a similar manner to a conventional phone used to communicate with a remote terminal (110, 120). In addition, the handheld device (100) can also receive one or more voice commands (500) during that communication. For example, a voice command (500) can cause the handheld device (100) to schedule an appointment, check for conflicts with another handheld device, computer, etc. Furthermore, the voice command (500) can be issued from either the handheld device (100) or the remote terminal (110, 120). The voice command (500) is converted to an executable command (530) using a speech recognition component (510) (e.g., software) that is then executed by a processor (260). The phone (200) and the processor (260) are housed together (300). Thus, the handheld device (100) remains positioned adjacent to the user's face during communication when the voice command (500) is received. Preferably, the handheld device (100) generates an acknowledgment (580) when the command is executed. Also preferably, the handheld device (100) includes a memory (270), a keypad (290), and a display (280).

## Description

### Field of the Invention

The invention pertains to a handheld communication and processing device that is responsive to a voice command received during communication with a remote terminal so that the device can remain positioned adjacent to the user's face during operation thereof.

### Background of the Invention

The use of mobile phones and personal digital assistants (PDAs) is widespread and is considered by many to be essential to business. Mobile phones can be used for essentially unrestricted communication, and PDA's can be used to perform a variety of functions such as determining time-zones, storing credit card numbers, storing addresses and phone numbers, storing appointments, etc. It is often desired to access the information stored in a PDA or to use the PDA to perform any number of functions while talking on the phone.

Typically, the communication features of the mobile phone are embodied in a separate and distinct device from the functional tools of the PDA. As such, the user must carry multiple devices and coordinate the use of each (e.g., talk on the phone while locating and operating the PDA). Where the functions of the mobile phone and those of the PDA have been combined into a single device, the functions must be used separately. That is, the device can be used for communication, or the device can be used as a PDA. However, the device cannot be used simultaneously for communication and as a PDA. For example, when the device is being used for a phone conversation and the user wants to use the PDA to check the availability of a proposed meeting time being discussed during the phone conversation, the user must reposition the device to view the display and operate the PDA keypad, thus interrupting the conversation.

### Summary of the Invention

Given the state of the art, a need exists for a method and a device which better integrate the communication functions of a phone with the functional tools of a PDA in a single handheld device.

To in part fill the afore-mentioned need, the inventors have devised a handheld communication and processing device and a method for operation thereof. The handheld device combines the communication functions of a phone and the functional tools of a personal digital assistant (PDA). The handheld device is operable in a similar manner to a conventional phone for communicating with a remote terminal (e.g., another handheld device, a desktop computer, etc.). In addition, the communication and processing device can also receive one or more voice commands. Voice commands can be spoken during communication with the device positioned adjacent to the user's face. In one embodiment, the user operates a switch (e.g., presses a button) to activate a microphone or to open a connection between the mouth piece of the phone and the voice recognition component for receiving voice commands. in another embodiment, the voice recognition component distinguishes the voice commands from among the other voice communications (i.e., the underlying conversation). In any event, a voice recognition component converts the received voice commands to commands that are executable by the processor. For example, when the voice command "Check Availability of August Tenth at One P.M." is received, an executable command is generated causing the processor to access a calendar and check the availability of the requested date. That is, the processor activates a function or routine in response to receiving the executable command. The function or routine searches for the requested date (e.g., in a calendar database). When the command is executed, the processor generates an acknowledgment (preferably an audible alarm) so that the user knows the command has been executed. For example, where the search returns empty, the processor generates a voice acknowledgment (e.g., "Available"). Preferably, the handheld communication and processing device also includes a keypad and a display for more conventional computing input and output.

In one embodiment of the invention, two or more similar handheld devices each check appointment availability in response to a voice command initiated at one of the devices. Each device can report back separately (i.e., to the user of that device), or data can be synchronized therebetween to report back separately or as a group. For example, data can be synchronized by each handheld device receiving the voice command and checking the requested appointment availability at that device. The availability (and preferably alternative availabilities) can be transmitted among the other connected devices either one at a time or simultaneously to each. Once a common availability is determined (i.e., either each device indicates the requested time or an alternative time is available or not available), an audio signal is generated either at the device where the voice command was issued or at each of the participating devices. Preferably, where the audio signal is generated only atthe device where the voice command was issued, the audio signal is audible to the users at each handheld device (i.e., it is transmitted over the communication path). Alternatively, the voice command can be initiated from a conventional phone that is participating in the communication, and the command can be executed at the handheld device.

By combining the communication functions of the mobile phone and the functional tools of the PDA into the handheld device of the present invention, only a single device is needed to perform the functions of either component. In addition, the functional tools of the handheld device are operable while the user is talking on the phone of the handheld device so that an underlying conversation can continue uninterrupted. An added advantage is that the user can readily schedule appointments, transfer data, and/or perform any other of a variety of functions while continuing the underlying conversation.

These and other important advantages and objectives of the present invention will be further explained in, or will become apparent from, the accompanying description, drawings and claims.

### Brief Description of the Drawings

Illustrative and presently preferred embodiments of the invention are illustrated in the drawings, in which:
FIG. 1 is an overview of a communication network over which the handheld device and method of operation thereof can be implemented;
FIG. 2 is a diagram of the hardware components of the handheld device;
FIG. 3 is a perspective view of an exemplary handheld device;
FIG. 4 shows the steps of a method of operation of the handheld device; and
FIG. 5 shows the functional components of the handheld device.

### Description of the Preferred Embodiment

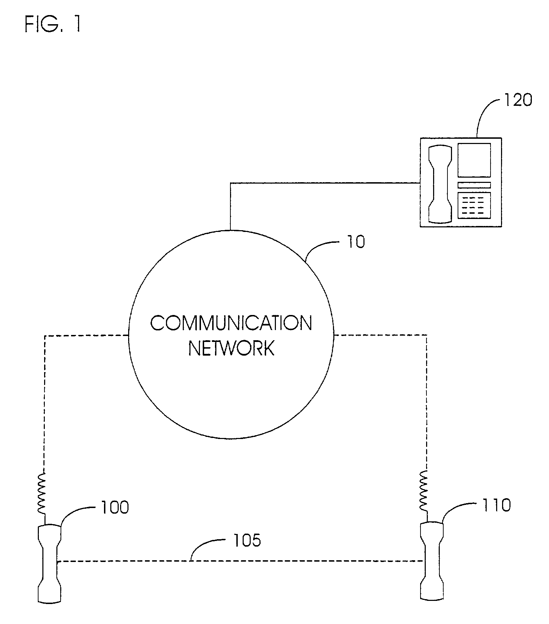

FIG. 1 shows a communication network 10 over which the device and method of the present invention can be implemented. A handheld communication and processing device 100 is shown connected to a remote terminal 110 and/or 120 via a communication network 10. The handheld device 100 establishes a wireless connection (shown by the dashed line in FIG. 1) with the communication network 10, and can then be conventionally linked with any remote terminal 110, 120, including but not limited to, another handheld communication and processing device, a conventional wireless phone (e.g., digital, cellular), a conventional circuit switched telephone terminal, a laptop or desktop personal computer (PC) or other computer system (e.g., voicemail, automated caller response system), etc.

It is understood that the network 10 can be any suitable communication network including, but not limited to, a public switched telephone network (PSTN), a packet-based network (e.g., the Internet), a cellular or digital telephone network, radio network, satellite network, etc., or a combination thereof. The signals are routed over the network 10 to establish a communication channel between the handheld device 100 and the remote terminal 110, 120. Alternatively, the handheld device 100 can establish a direct link 105 such as a radio link with a remote terminal (e.g., 110) and thus bypass the communication network 10 altogether. Likewise, it is understood that the handheld device 100 can be linked to one or more remote terminals 110, 120 at the same time (e.g., a conference call).

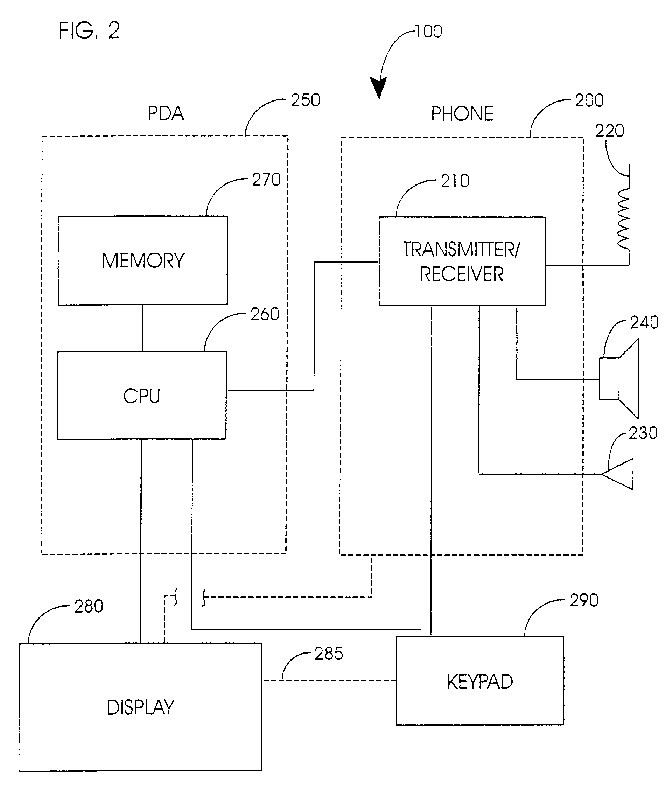

The components of the handheld communication and processing device 100 of the present invention are shown in more detail in FIG. 2. The handheld device 100 includes a telephony portion or phone 200 for telephony services such as communicating with the remote terminal 110, 120 and an information management portion or personal digital assistant (PDA) 250 for information management services such as making appointments, storing and transferring data, etc. The phone 200 has a transmitter/receiver 210 and associated antenna 220. The handheld device 100 also includes a microphone 230 and a speaker 240. The microphone 230 and the speaker 240 can be provided separately and in addition to those conventionally associated with the phone 200, or preferably the microphone 230 and the speaker 240 are linked to function both with the phone 200 and with the PDA 250. The PDA 250 includes at least a processor 260 (e.g., an Intel PENTIUM® processor, a Transmetta processor, etc.). Preferably, the PDA 250 also includes a conventional memory 270 such as a RAM (random access memory). The processor 260 can be removable (e.g., a PC card or other suitable device that is inserted into the handheld device 100). Likewise, the memory 270 can be removable and/or interchangeable. For example, the memory 270 can be remotely accessed by the processor 260 (e.g., at remote terminal 110, 120, using infrared or Bluetooth links, via the Internet, etc.), can be built into the processor 260, can be inserted into the handheld device 100 (e.g., as a diskette or PC card), etc.

Preferably, the handheld device 100 also includes a display 280 and a keypad 290. The display 280 can be any interface such as a liquid crystal display (LCD) or digital display, either of which might display a graphical user interface (GUI), text interface, etc. Likewise, the keypad 290 can have numeric keys, letter ortext keys, function keys, etc. or a combination thereof. The display 280 and the keypad 290 can be provided separately and in addition to those conventionally associated with the phone 200, or preferably the display 280 and the keypad 290 are linked to function both with the phone 200 and with the PDA 250. The display 280 and keypad 290 can be directly linked 285 or integrally combined (e.g., a touch screen). The display 280 and the keypad 290 can also be used for both input (e.g., numerical sequences, text, commands stored in function keys, etc.) and for output (e.g., displaying numerical sequences, text, etc.) purposes.

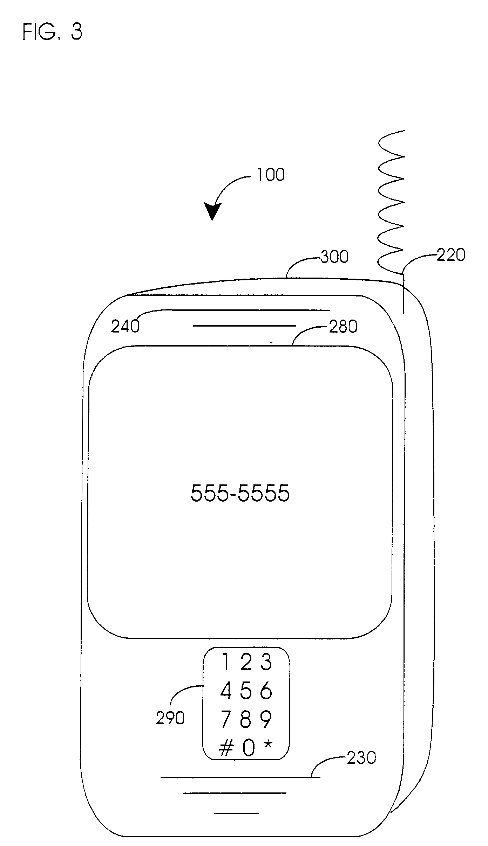

The phone 200, the PDA 250, and associated components of the device 100 (i.e., the microphone 230, the speaker 240, etc.) are housed together (e.g., see FIG. 3). As such, the handheld device 100 can be positioned adjacent to the face of a user during communication (e.g., a conversation) with the remote terminal 110, 120, when a voice command issued by the user is received at the microphone 230. That is, the handheld device 100 can be conventionally held by the user when communicating via the phone 200, with the microphone 230 near the user's mouth and the speaker 240 near the user's ear, and need not be repositioned (i.e., held in front of the user) for operation of the PDA 250 by voice command. However, it is to be understood that use of the handheld device 100 in "hands-free" mode is also contemplated under the teachings of the present invention. That is, a headset having a microphone and a speaker (e.g., for use with conventional wireless phones while driving a vehicle) can also be used with the handheld device 100 of the present invention.

It is understood that the housing 300 shown in FIG. 3 can be readily manufactured by one skilled in the art (e.g., a plastic case) and the size and shape will depend on design considerations such as ergonomics, mobility, aesthetics, etc. In addition, the housing 300 can be a single integral unit, or multiple units combined at manufacture or for combination by the user prior to use. For example, a user may initially purchase either a phone or a PDA, and then later purchase the remaining device as an "add-on" module. Likewise, the display 280 and keypad 290 are conventionally available and can be modified within the scope of the present invention (e.g., to include functional keys, text keys, etc.). Indeed, the handheld device 100 of the present invention need not even have a display 280 and/or a keypad 290, and can be exclusively used with audio input and output.

In addition, conventional connections to the handheld device can be provided. For example, parallel, serial, and/or USB ports can be provided for linking the handheld device 100 to peripheral devices (e.g., a PC, a conventional PDA, a printer, a monitor, a scanner, a zip drive, etc.). Or for example, phone jacks, DSL or other network connections can be provided, as can connections to alternative sources of power. Likewise, ports can also be provided for receiving batteries, PC cards, storage devices (e.g., diskettes), etc. within the handheld device 100.

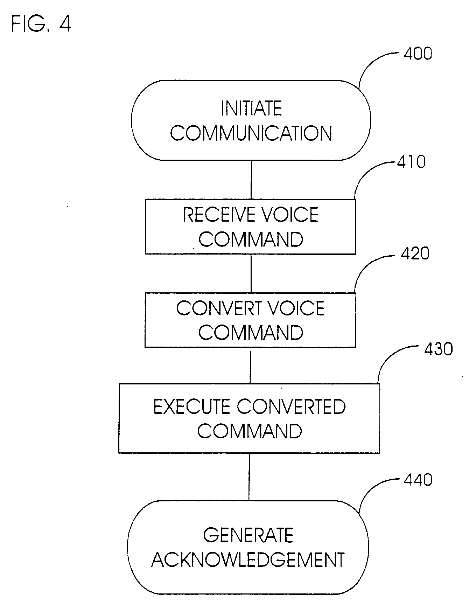

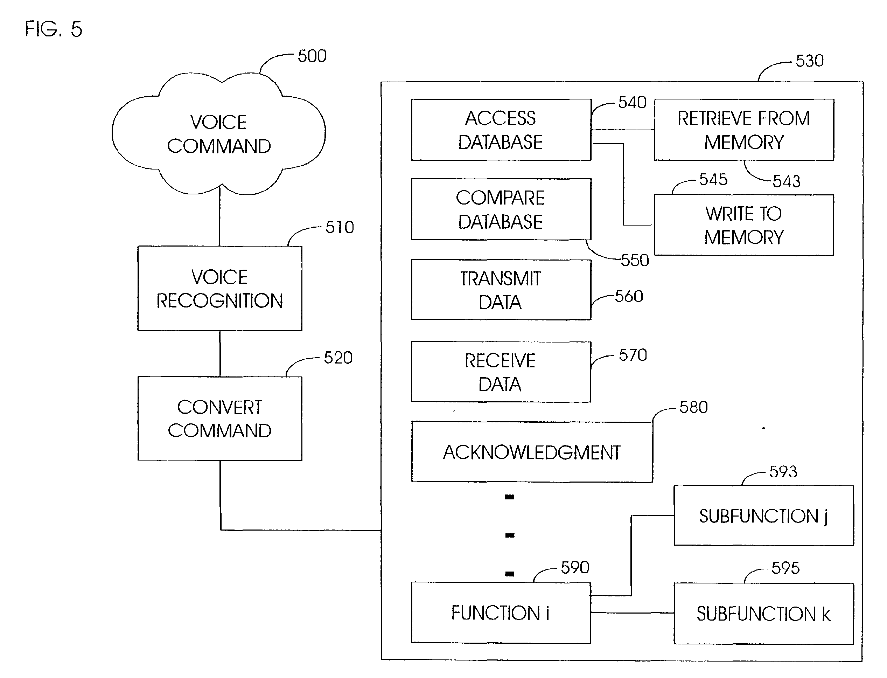

FIG. 4 shows the steps of a method for integrating telephony services (i.e., those provided by the phone 200) and information management services (those provided by the PDA 250). In step 400, a communication channel is established between the handheld device 100 and at least one of the remote terminals 110, 120 (e.g., over communication network 10). In step 410, the handheld device 100 receives a voice command (500 in FIG. 5) issued by the user at the microphone 230. In one embodiment, the user operates a switch (e.g., a button on the housing of the handheld device 100, not shown) to activate the microphone 230 or otherwise open a link to the voice recognition component (510 in FIG. 5). In another embodiment, the voice recognition component 510 distinguishes the voice command 500 from the other voice communications (i.e., the underlying conversation). In any event, the received voice command 500 is converted (e.g., using the speech recognition component 510 or a separate conversion component 520) to executable commands in step 420. In step 430, the processor 260 executes the converted command, and optionally, in step 440 an acknowledgment (580 in FIG. 5) is generated (i.e., by the processor 260 and delivered over speaker 240). The acknowledgment 580 informs the user of the handheld device 100 that the command has been executed, and preferably, the results of the executed command (e.g., that a requested appointment time is unavailable, that a requested appointment has been scheduled, that the data has been sent or received, etc.).

In one embodiment, two or more similar handheld devices (e.g., 100, 110) each check appointment availability in response to a voice command 500 (FIG. 5) initiated at one of the devices 100, 110. Each device 100, 110 can report back separately (i.e., to the user of that device 100, 110), or data can be synchronized therebetween and each device 100, 110 reports back separately or as a group. For example, each handheld device 100, 110 receives the voice command 500 and checks for the requested appointment availability at that device 100, 110. To determine availability among the other devices, each device 100, 110 transmits data to the other devices indicating that the requested time and preferably an alternative time is available or not available. The data (i.e., the requested and alternative appointment availability) is transmitted among the other connected devices either one at a time (e.g., where there are more than two devices 100, 110) or simultaneously to each. Once there is a match of the requested availability or an alternative availability, an audio signal is generated either at the device 100, 110 where the voice command 500 was initially issued or at each of the participating devices 100, 110. Preferably, when the audio signal is generated only at the device where the voice command 500 was issued, the audio signal is audible to the users at each handheld device (i.e., it is transmitted over a common communication channel). Alternatively, the voice command can be initiated from a conventional phone 120 that is participating in the communication and the command can be executed at the handheld device 100.

The following example is illustrative of the method shown in FIG. 4. A user of the handheld device 100 keys the phone number of the remote terminal 110 into the keypad 290, which is displayed on display 280, and a communication channel (see FIG. 1) is established between the handheld device 100 and the remote terminal 110 over the communication network 10 (step 400). During a conversation with the user of the remote terminal 110, the user of the handheld device 100 issues the voice command 500 "Am I Available On August Tenth at One P.M.". The voice command 500 is received at the microphone 230 and distinguished from the underlying conversation as a voice command by the voice recognition component (step 410). The voice recognition component 510 or a separate conversion component 520 converts the received voice command to an executable command (step 420). That is, a function or routine is activated that causes the processor to access a calendar (i.e., a database stored in memory 270 or on the Internet) and to check the availability of the requested date (i.e., searching the data and time fields of the database). Or for example, the voice command can cause the processor 260 to log an appointment where the user is making an appointment, or retrieve and report or store information such as a credit card number, password, phone number, etc. Once the command is executed by the processor 260, an acknowledgment 580 such as a voice recording "You Are Available", is generated by the processor 260 and returned to the user of the handheld device 100.

Preferably, the acknowledgment 580 is an audible alarm such as a tone or simulated/recorded voice. However, any suitable acknowledgment 580 can be generated, including but not limited to a graphical representation in display 280, a vibration, etc. In addition, other PDA alarms can be sounded through the speaker 240 during a phone call or communication. For example, where a user is talking to someone at a remote terminal 120 and has an appointment in five minutes, the PDA can sound an alarm to alert the user of the appointment so that the user can end the conversation and proceed to the appointment. It is also to be understood that the acknowledgment 580 can be sophisticated (e.g., a voice simulation or recording) or simple (e.g., a tone), or a combination thereof. Likewise, the voice command 500 can be sophisticated or simple, or a combination thereof. For example, the voice command 500 can be specific, such as "Calendar-Check Availability - August Tenth - One P.M.". Alternatively, the voice command 500 can be general, such as "Am I Available For A Meeting On August Tenth At One P.M.". In yet another embodiment, the handheld device 100 can accept a voice command 500 issued from the remote terminal 110, 120. For example, where the voice command 500 "Are You Available August Tenth At One P.M." is issued at the remote terminal 110, 120, the handheld device 100 receives the voice command 500 (i.e., over the communication channel), searches the calendar for the requested date and time, and returns an acknowledgment 580. Preferably, in this embodiment, this feature can be activated or deactivated by the user of the handheld device 100 (e.g., by pressing a button on the housing, preprogramming the handheld device 100, speaking a command such as "Automatic Response - Off", etc.).

It is understood that the method of the present invention is not limited to the steps shown in FIG. 4, and other embodiments are contemplated under the teachings of the present invention. That is, one embodiment can include additional steps, while another embodiment can include fewer steps than those shown in FIG. 4. Likewise, the steps shown in FIG. 4 need not be carried out in the order shown. For example, prior to initiating communication in step 400, a voice command can be received at the handheld device 100 (e.g., steps 410 and 420) that causes the PDA 250 to initiate communication with the remote terminal 110, 120 (e.g., steps 430 and 400). For instance, when the voice command "Dial Accountant" is received by the handheld device 100, the processor 250 searches a phonebook database stored in the memory 270 to find the phone number of the user's accountant, and then establishes a communication channel through the phone 200 (e.g., by transmitting a DTMF sequence) with the remote terminal 110, 120 of the user's accountant.

FIG. 5 illustrates the functional components of the handheld device 100 of the present invention. A voice command 500 is received (i.e., by the microphone 230) and distinguished by the voice recognition component 510 of the handheld device 100. The voice recognition component 510 can be software stored in the memory 270 and executed by the processor 260, hardware (e.g., a dedicated chip programmed to perform a voice recognition routine), or a combination thereof. The voice command 500 is then converted by component 520 to an executable command 530. The conversion component 520 can also be software, hardware, or a combination thereof, and can be part of the voice recognition component 510 or a separate component. The executable command can be any suitable function or subfunction performed by the processor 260, as illustrated by the following examples.

As an example of a function and subfunction shown in FIG. 5, the voice command 500 of "Check My Availability For August Tenth at One P.M." is received at the microphone 230. The voice recognition component 510 parses the voice command 500 into suitable individual commands such as "Availability", "August Tenth", and "One P.M.". The parsed commands are then converted to executable commands 530 by the conversion component 520. For instance, the first command, "Availability" (in its converted format) instructs the processor 260 to access a calendar 540 (i.e., a database stored in memory 270) and query or search the entries for "August Tenth" at "One P.M.". If the query returns empty, the processor generates an acknowledgment 580 to signal the user that the requested time is available. For instance, the acknowledgment 580 can be selected from a list of voice responses stored in memory 270 so that the user hears the response "That Time Is Available" at the speaker 240. Similarly, when the query returns with an entry, the processor 260 can continue to search for the next available time (e.g., a subfunction 593, 595) and return an acknowledgment 580 such as "That Time Is Not Available - The Next Available Time Is August Tenth at One Thirty P.M.".

As another example, a data coordination function 550 can be used to automatically schedule an appointment between two or more devices. The processor 260 uses the phone 200 to establish a data link (see FIG. 1) between the handheld device 100 and the remote terminal 110, 120 (e.g., a computer, another handheld device, etc.). Once the data link is established, the processor 260 coordinates data transfer between the handheld device 100 and the remote terminal 110, 120. For example, where the remote terminal is another handheld device 100 (or otherwise connected to a PC, PDA, or the like), and the voice command 500 "Schedule An Appointment For Next Monday" is issued, a data channel is established between the two handheld devices 100. Each processor 260 at each handheld device 100 searches the respective calendar database for available times and exchanges available times with the other processor 260. The available times are compared and, using a suitable algorithm (e.g., first available match), an appointment is scheduled and recorded in each of the respective calendar databases.

It is understood that the format of the data transmission between each device 100, 110 can vary based on design considerations. For example, the data transmission can be that of a conventional modem or fax transmission. The underlying conversation can be temporarily paused while the data is transmitted from one device to the other. Alternatively, the data transmission can be established over a second link altogether separate from the voice communications link between the two devices. In another embodiment, the data can be transmitted over the same link, but at a distinct frequency from the voice communication. Or, the data can be transmitted simultaneously with the voice communication. For example, the data transmission and the voice communication can be packetized for exchange over a packet switched network. Separate packets can contain either voice or data communications with distinct destination addresses (i.e., that of either the phone 200 or the PDA 250). Alternatively, the data transmission can be voice commands issued from the PDA 250 of one device 100 to the PDA of the other device. Other exchange scenarios can also be used under the teachings of the present invention.

In another example, the coordination function 550 can also be used to account for differences in time zones when scheduling an appointment. For example, each device 100, 110 can be programmed in advance with a time zone code such as "mountain time". Or for example, a function (e.g. 590) can convert times based on a voice command 500 such as "mountain time". Alternatively, the time zone can be determined by the area code of the called device, a signal sent from one device to another specifying the time zone, etc. By way of example, when the device 100 recognizes the voice command 510 "mountain time", and the connected device 110 is in the pacific time zone, the function 590 makes the appropriate conversion (i.e., adding or subtracting one hour) and preferably returns an appointment time with the appropriate time zone identification (i.e., "the appointment is scheduled for one P.M. mountain time). The time zone coordination function is particularly useful when communicating across the International Date Line, when it is often difficult to schedule appointments during the business hours of each time zone. For example, a voice command can be "schedule an appointment for early afternoon, mountain time". In this example, the devices 100, 110 automatically schedule an appointment as described above, using the time zone identification (i.e., "mountain time") to limit the appointment between 12 noon and Two P.M., mountain time, factoring in date and time considerations of the different time zones.

Other examples of executable commands 530 are also shown in FIG. 5. For instance, the processor 260 can be programmed to access any suitable database including the calendar discussed in the above example, a phone and address book, a list of passwords, credit cards, prices, etc. Furthermore, the processor 260 can be programmed to retrieve data from and/or write to the accessed database (543, 545, respectively). Also for example, the data coordination function 550 can be used to update the user's calendar stored in the handheld device 100 and/or the user's calendar stored at the user's office computer. As another example, the processor 260 can be programmed to transmit data 560, or to receive data 570, such as email, Internet sites (i.e., hypertext markup language or HTML pages), text files, etc. Any suitable function 590 and subfunctions 593, 595 can be programmed for execution by the processor 260 (e.g., dialing another remote terminal to establish a conference call).

It is understood that any suitable executable command 530 can be programmed for execution by the processor 260 and that those shown and described above with respect to FIG. 5. are merely illustrative and are not intended to limit the scope of the present invention. Voice recognition and conversion to executable commands is well known in the art and the related software and hardware is conventionally available. Likewise, programming routines and subroutines and the processor 260 to execute the voice commands 500 and to generate an acknowledgment 580 is also well understood.

While illustrative and presently preferred embodiments of the invention have been described in detail herein, it is to be understood that the inventive concepts may be otherwise variously embodied and employed, and that the appended claims are intended to be construed to include such variations, except as limited by the prior art.

## Claims

1. A handheld communication and processing device (100) comprising:
a phone (200) for communicating with a remote terminal (110, 120), said phone having a microphone for receiving a voice command (500) at said phone;
a processor (260) for executing said received voice command;
a housing (300) having said phone, said microphone, and said processor each housed therein so that said device is positionable adjacent to the face of a user during communication with said remote terminal when said voice command is received.

2. The handheld communication and processing device (100) of claim 1 wherein an acknowledgment (580) is generated by said processor (260) when said voice command (500) is executed.

3. The handheld communication and processing device (100) of claim 1 further comprising a speech recognition component (510) for converting said voice command (500) to an executable command (530), wherein said speech recognition component is software executable by said processor (260).

4. A method for integrating telephony services and information management services, comprising:
providing a user with a wireless, handheld device (100) comprising a telephony portion (200) and an information management portion (250); and
sounding through a speaker (240) of the telephony portion of the handheld device, while the telephony portion of the handheld device is in use, alarms (580) generated by the information management portion ofthe handheld device.

5. A method as in claim 4, further comprising converting voice commands (500) received by the telephony portion (200) of the handheld device (100) into executable commands (530) which are executed by the information management portion (250) of the handheld device, wherein said alarms (580) comprise acknowledgments that said executable commands are executed.

6. A method as in claim 5, wherein the voice commands (500) are received by the telephony portion (200) of the handheld device (100) over a communication channel which exists between the handheld device and a remote terminal (110, 120).

7. A method as in claim 5, wherein said information management portion (250) of the handheld device (100) further coordinates an appointment between time zones.

8. A method as in claim 5, wherein said voice commands (500) comprise a command that the information management portion (250) of the handheld device (100) retrieve and report information which is managed by the information management portion of the handheld device.

9. A method as in claim 5, wherein said voice commands (500) comprise a command that the information management portion (250) of the handheld device (100) store information which is to be managed by the information management portion of the handheld device.

10. A method as in claim 5 wherein said user is a first user and said handheld device (100) is a first handheld device, the method further comprising:
providing a second user with a second wireless, handheld device (100) comprising a telephony portion (200) and an information management portion (250);
sounding through a speaker (240) of the telephony portion of the second handheld device, while the telephony portion of the second handheld device is in use, alarms (580) generated by the information management portion of the second handheld device;
wherein, when said first and second users open a communication channel between their first and second handheld devices, at least some of said alarms sounded by the first handheld device are converted into executable commands which are executed by the information management portion of the second handheld device.
